# EUROPÄISCHE PATENTANMELDUNG

(11) **EP 2 502 858 A1**
(43) Veröffentlichungstag der Anmeldung: **26.09.2012**
(21) Anmeldenummer: 11159435.4
(22) Anmeldetag: 23.03.2011
(51) Int. Cl.: B65G 39/02, B65G 39/09

(54) **Antriebseinheit für eine Gurtförderanlage**

(71) Anmelder: ABB Schweiz AG, 5400 Baden (CH)
(72) Erfinder: Maier, Urs, 5628, Aristau (CH)
(74) Vertreter: ABB Patent Attorneys

(57) **Zusammenfassung**

Gegenstand der Erfindung ist es, dass eine Trommelwelle einer Antriebseinheit mit einem getriebelosen Antrieb für eine Gurtförderanlage eine Hohlwelle (2) aufweist. Der getriebelose Antrieb umfasst eine lagerlose Rotorwelle (5) und die Hohlwelle (2) umfasst an einer der Rotorwelle (5) zugewandten Seite eine radiale Stirnfläche. Ein Aussendurchmesser dieser Stirnfläche ist gleich gross oder kleiner als ein Aussendurchmesser der Hohlwelle (2). Die Hohlwelle (2) ist über die Stirnfläche mit der Rotorwelle (5) verbunden.

## Beschreibung

### TECHNISCHES GEBIET

Die vorliegende Erfindung bezieht sich auf das Gebiet der Gurtförderanlagen. Sie betrifft eine Antriebseinheit für eine Gurtförderanlage mit einer Antriebstrommel, einer mit der Antriebstrommel verbundenen, beidseitig der Antriebstrommel gelagerten Trommelwelle und einem getriebelosen Antrieb, welcher eine lagerlose Rotorwelle aufweist.

### STAND DER TECHNIK

Gurtförderanlagen, welche auch als Förderbandanlagen oder Bandförderer bezeichnet werden können, werden zum Transport von Stückgut oder Schüttgut im Bergbau und in der Industrie verwendet. Wie aus DE 847,427 bekannt, ist ein endloser Gurt horizontal rollend gelagert und wird von einer Antriebstrommel, welche mit einer Trommelwelle verbunden ist und durch einen Antrieb in eine Drehbewegung versetzt wird, angetrieben.

Um grössere Antriebsleistungen von typischerweise mehr als 2 MW auf die Antriebstrommel übertragen zu können, werden getriebelose Antriebe verwendet. Hierbei ist ein Rotor eines getriebelosen Antriebes direkt auf einer lagerlosen Rotorwelle angebracht. Als Gegenstück ist ein Stator, der mit einem Fundament verbunden ist, aussen um den Rotor herum angeordnet. Die lagerlose Rotorwelle ist mit der Trommelwelle verbunden.

"Advanced Drive System Saves up to 20% Energy", Siemens Broschüre, beschreibt eine Antriebseinheit für eine Gurtförderanlage mit einer Antriebstrommel, einer Trommelwelle und einem getriebelosen Antrieb mit einer lagerlosen Rotorwelle. Hierbei weist die Trommelwelle Stehbolzen auf, welche durch entsprechende Bohrungen in einem innen liegenden Flansch der Rotorwelle gesteckt sind und auf der Rückseite des innen liegenden Flansches mittels Muttern gesichert sind. Diese Lösung ist aufgrund der hohen Toleranzanforderungen problematisch im längeren Betrieb und ist daher schwierig in der Handhabung.

Eine zweite Möglichkeit für die Verbindung zwischen der Trommelwelle und der Rotorwelle besteht darin, wie bei getriebelosen Antrieben von Bergwerkförderanlagen, eine durchgehende Welle anstatt einer separaten Trommelwelle und Rotorwelle zu verwenden. Durch das höhere Gewicht der durchgehenden Welle im Vergleich zu den Gewichten der separaten Wellen und die fehlende Möglichkeit einer Trennung ergeben sich aber erhebliche Nachteile bei einer Montage, einer Demontage und einem Schutz der Anlage.

Eine dritte Möglichkeit ist eine Verwendung einer Flanschverbindung. Dabei muss ein rotorwellenseitiger Flansch der Trommelwelle lösbar montiert sein, etwa durch Aufschrumpfen des Flansches auf die Trommelwelle, um eine Montage und Demontage eines rotorwellenseitigen Trommelwellenlagers zu gewährleisten. Durch eine zusätzliche Fläche auf einer Aussenseite der Trommelwelle, welche für das Aufschrumpfen notwendig ist, wird die Trommelwelle länger und der Platzbedarf des Antriebes steigt. Dies ist besonders bei einem Einsatz Untertage oder bei anderen Einsatzorten mit einem beschränkten Platzbedarf nachteilig und führt ausserdem zu einer verminderten Steifigkeit und damit verbundenen Problemen mit einer Durchbiegung der Rotorwelle.

### DARSTELLUNG DER ERFINDUNG

Aufgabe der vorliegenden Erfindung ist es, eine Antriebseinheit für eine Gurtförderanlage mit einer Antriebstrommel, einer Trommelwelle und einem getriebelosen Antrieb zur Verfügung zu stellen, welche einen verringerten Platzbedarf und eine erhöhte Steifigkeit aufweist.

Diese Aufgabe wird durch eine Antriebseinheit für eine Gurtförderanlage mit einer Antriebstrommeleinheit, einer Antriebstrommeleinheit und eine Verwendung einer Hohlwelle als eine Trommelwelle für eine Antriebseinheit mit den Merkmalen der unabhängigen Patentansprüche gelöst. Bevorzugte Ausführungsformen sind Gegenstand der abhängigen Patentansprüche.

Gegenstand der Erfindung ist es, eine Trommelwelle zumindest teilweise als eine Hohlwelle auszubilden. Die Hohlwelle umfasst an einer der Rotorwelle zugewandten Seite eine radiale Stirnfläche. Die Hohlwelle ist über die Stirnfläche mit der Rotorwelle verbunden. Ein Aussendurchmesser der Stirnfläche ist gleich gross wie oder kleiner als ein Aussendurchmesser der Hohlwelle. Dadurch wird es ermöglicht, die Stirnfläche direkt einschliessend an ein rotorseitiges Trommelwellenlager zu positionieren.

Eine erste bevorzugte Ausführungsform betrifft eine Antriebseinheit, bei der die Trommelwelle zusätzlich zu der Hohlwelle einen weiteren Teil in Form einer Anschlusswelle aufweist. Diese Anschlusswelle ist eine Vollwelle mit einem Durchmesser, der kleiner ist als der Aussendurchmesser der Hohlwelle. Die Hohlwelle und die Anschlusswelle sind an einer der Rotorwelle gegenüberliegenden Seite der Hohlwelle miteinander verbunden und bilden bei einer Rotation um eine Drehachse der Trommelwelle eine Einheit. Jeweils ein Trommelwellenlager ist auf jeder Seite der Antriebstrommel auf der Hohlwelle und der Anschlusswelle angeordnet. Dadurch wird eine Verwendung eines kleineren Trommelwellenlagers auf einer der Rotorwelle abgewandten Seite der Antriebstrommel ermöglicht.

Eine weitere vorteilhafte Ausführungsform betrifft eine Antriebseinheit, bei der die Hohlwelle im Bereich der Verbindung mit der Rotorwelle eine kreisförmige Verstärkung, welche auch als eine Verstrebung oder eine Versteifung bezeichnet werden kann, aufweist. Dadurch wird eine bessere Kraftübertragung von der Rotorwelle auf die Hohlwelle ermöglicht.

Eine weitere vorteilhafte Ausführungsform betrifft eine Antriebseinheit, bei der die Verstärkung der Hohlwelle so positioniert ist, dass diese mindestens einen Teil der der Rotorwelle zugewandten Stirnfläche der Hohlwelle bildet. Dies ermöglicht eine Positionierung von Verbindungselementen sowohl in einem Ring, der durch eine Mantelfläche der Hohlwelle gebildet wird als auch in der restlichen Stirnfläche. Dadurch wird eine bessere Krafteinleitung auf die Hohlwelle ermöglicht.

Eine weitere vorteilhafte Ausführungsform betrifft eine Antriebseinheit, bei der der Durchmesser der Hohlwelle kleiner als ein Durchmesser der Antriebstrommel und grösser als ein Durchmesser der Rotorwelle ist. Dadurch wird eine Verwendung eines möglichst kleinen Trommelwellenlagers bei der Hohlwelle ermöglicht.

### KURZE BESCHREIBUNG DER FIGUREN

Nachfolgend wird die Erfindung anhand von Ausführungsbeispielen im Zusammenhang mit den Figuren näher erläutert. Die Figuren zeigen:
- Figur 1: eine Antriebstrommeleinheit mit einem getriebelosen Antrieb in einem Schnitt in axialer Richtung;
- Figur 2: eine Verstärkung einer Hohlwelle in einem Schnitt in axialer Richtung.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

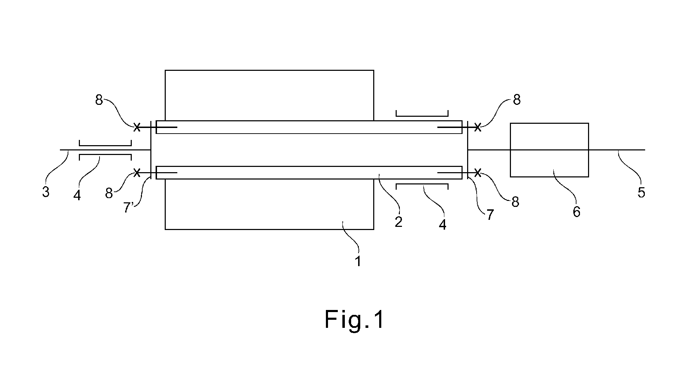

Fig. 1 zeigt eine Antriebstrommeleinheit einer Gurtförderanlage und einen getriebelosen Antrieb in einem Schnitt in axialer Richtung quer zur Gurtlaufrichtung. Eine Antriebstrommel 1 sitzt auf einer Trommelwelle und ist beidseitig durch Trommelwellenlager 4 gelagert. Die Trommelwelle umfasst eine Hohlwelle 2 und eine Anschlusswelle 3, welche über einen Flansch 7' der Anschlusswelle 3 und eine der Anschlusswelle 3 zugewandte Stirnfläche der Hohlwelle 2 mit der Hohlwelle 2 mittels Bolzen 8 verbunden ist. Die Anschlusswelle 3 weist einen kleineren Durchmesser als der Aussendurchmesser der Hohlwelle 2 auf. Jeweils ein Trommelwellenlager 4 befindet sich auf der Hohlwelle 2 und der Anschlusswelle 3. Auf einer der Anschlusswelle 3 gegenüberliegenden Seite der Hohlwelle 2 ist eine lagerlose Rotorwelle 5 über einen Flansch 7 der Rotorwelle 5 und einer der Rotorwelle 5 zugewandten Stirnfläche der Hohlwelle 2 mit Hilfe von Bolzen 8 verbunden. Auf der Rotorwelle 5 befindet sich der Rotor 6. Als Gegenstück ist ein Stator aussen um den Rotor 6 herum angeordnet, welcher in der Fig. 1 nicht dargestellt ist.

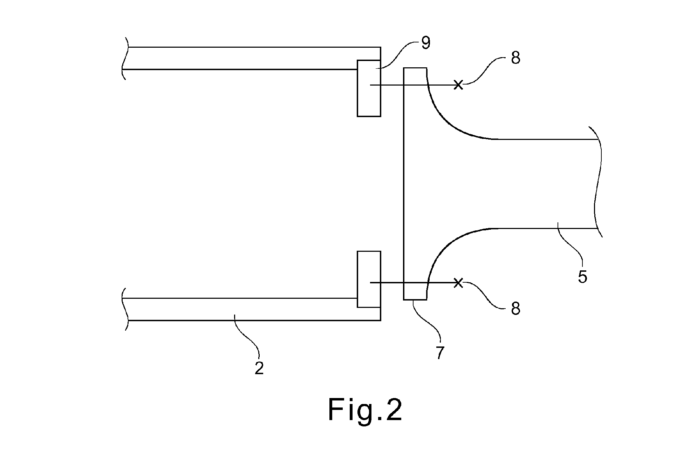

Fig. 2 zeigt eine Detailansicht einer Verstärkung 9 der Hohlwelle 2 in einem Schnitt in axialer Richtung. Die kreisringförmige Verstärkung 9 ist fest mit der Hohlwelle 2 verbunden und so positioniert, dass diese gemeinsam mit einer der Rotorwelle 5 zugewandten Kante der Hohlwelle 2 eine ebene Stirnfläche in einer radialen Ebene bildet. Auf dieser Stirnfläche liegt eine der Hohlwelle 2 zugewandten Fläche des Flansches 7 der Rotorwelle 5 auf und bildet eine Kontaktfläche für die Verbindung zwischen der Hohlwelle 2 und der Rotorwelle 5. Bolzen 8 fixieren die Rotorwelle 5 an der Verstärkung 9.

Die Anschlusswelle 3 muss nicht zwingend vorhanden sein. Es ist auch möglich, dass die Trommelwelle nur eine Hohlwelle aufweist. Die Rotorwelle 5 kann anstatt über einen Flansch 7 auch mit Hilfe von Stehbolzen, welche in die Verstärkung 9 der Hohlwelle 2 eingesetzt sind, direkt durch die Rotorwelle 5 gesteckt werden und auf einer Rückseite der Rotorwelle 5 gesichert werden. Anstelle von Bolzen zur Befestigung können andere lösbare Verbindungselemente wie etwa Nieten verwendet werden. Die Geometrie der Verstärkungen 9 kann beliebig gewählt werden. Besonders vorteilhaft sind dabei rotationssymmetrische Geometrien, da diese keine Unwucht der Trommelwelle hervorrufen. Auch muss die Position der Verstärkung 9 nicht zwingend direkt an einem Ende der Hohlwelle 2 sein. Es ist auch möglich die Verstärkung 9 in einem flanschnahen Bereich innerhalb der Hohlwelle 2 zu plazieren.

### BEZUGSZEICHENLISTE

- 1: Antriebstrommel
- 2: Hohlwelle
- 3: Anschlusswelle
- 4: Trommelwellenlager
- 5: Rotorwelle
- 6: Rotor
- 7, 7': Flansch
- 8: Bolzen
- 9: Verstärkung

## Patentansprüche

1. Antriebseinheit für eine Gurtförderanlage mit einer Antriebstrommel (1), einer mit der Antriebstrommel (1) verbundenen, beidseitig der Antriebstrommel (1) gelagerten Trommelwelle und einem getriebelosen Antrieb, welcher eine lagerlose Rotorwelle (5) aufweist, **dadurch gekennzeichnet, dass** die Trommelwelle eine Hohlwelle (2) aufweist, welche über eine der Rotorwelle (5) zugewandte Stirnfläche mit der Rotorwelle (5) verbunden ist, wobei die Stirnfläche einen Aussendurchmesser aufweist, der gleich gross wie oder kleiner als ein Aussendurchmesser der Hohlwelle (2) ist.

2. Antriebseinheit nach Anspruch 1, **dadurch gekennzeichnet, dass** die Trommelwelle neben der Hohlwelle (2) eine Anschlusswelle (3) aus Vollmaterial mit einem kleineren Durchmesser als der Aussendurchmesser der Hohlwelle (2) aufweist, beide Wellen an einer der Rotorwelle (5) abgewandten Seite der Hohlwelle (2) miteinander verbunden sind, ein rotorwellenseitiges Trommelwellenlager (4) die Hohlwelle (2) führt und ein der Rotorwelle (5) abgewandtes Trommelwellenlager (4) die Anschlusswelle (3) führt.

3. Antriebseinheit nach Anspruch 1 oder 2, **dadurch gekennzeichnet, dass** das die Hohlwelle (2) eine kreisförmige Verstärkung (9) im Bereich der Verbindung mit der Rotorwelle (5) aufweist.

4. Antriebseinheit nach einem der Ansprüche 1 bis 3, **dadurch gekennzeichnet, dass** die Verstärkung (9) zumindest teilweise die der Rotorwelle (5) zugewandten Stirnfläche der Hohlwelle (2) bildet.

5. Antriebseinheit nach einem der Ansprüche 1 bis 4, **dadurch gekennzeichnet, dass** der Aussendurchmesser der Hohlwelle (2) kleiner ist als ein Aussendurchmesser der Antriebstrommel (1) und grösser ist als ein Durchmesser der Rotorwelle (5).

6. Antriebstrommeleinheit für eine Gurtförderanlage mit einer Antriebstrommel (1) und einer mit der Antriebstrommel (1) verbundenen, beidseitig der Antriebstrommel (1) gelagerten Trommelwelle, welche mit einer lagerlosen Rotorwelle (5) eines getriebelosen Antriebes verbindbar ist, **dadurch gekennzeichnet, dass** die Trommelwelle eine Hohlwelle (2) aufweist, welche über eine der Rotorwelle (5) zugewandte Stirnfläche mit der Rotorwelle (5) verbindbar ist, wobei die Stirnfläche einen Aussendurchmesser aufweist, der gleich gross oder kleiner ist als ein Aussendurchmesser der Hohlwelle (2).

7. Verwendung einer Hohlwelle (2) bei einer Trommelwelle für eine Antriebstrommel (1) einer Antriebseinheit für eine Gürtförderanlage, wobei die Trommelwelle (2) durch Trommelwellenlager (4) beidseitig gelagert werden kann, die Hohlwelle (2) mit einer lagerlosen Rotorwelle (5) eines getriebelosen Antriebes über eine der Rotorwelle (5) zugewandte Stirnfläche verbindbar ist und die Stirnfläche einen Aussendurchmesser aufweist, der gleich gross oder kleiner ist als ein Aussendurchmesser der Hohlwelle (2).
